# EUROPEAN PATENT SPECIFICATION

(11) **EP 3 639 111 B1**
(45) Date of publication and mention of the grant of the patent: **06.08.2025**
(21) Application number: 18816954.4
(22) Date of filing: 14.06.2018
(51) Int. Cl.: H05K 5/00, G06F 1/18, G06F 1/16, H04L 69/14, H04M 1/72409, A45C 11/00, H04M 1/18

(54) **PORTABLE STORAGE DEVICE WITH MODULAR POWER AND HOUSING SYSTEM**
TRAGBARE SPEICHERVORRICHTUNG MIT MODULAREM STROM- UND GEHÄUSESYSTEM
DISPOSITIF DE STOCKAGE PORTABLE AVEC SYSTÈME D'ALIMENTATION ET DE BOÎTIER MODULAIRE

(30) Priority: 15.06.2017 US 201762520336 P; 07.07.2017 US 201715644556
(43) Date of publication of application: 22.04.2020
(73) Proprietor: Fasetto, Inc., Superior WI 54880 (US)
(72) Inventor: CHRISTMAS, Coy, Superior WI 54880 (US); MALPASS, Luke, Stoke On Trent ST2 TLW (GB)
(74) Representative: Marks & Clerk LLP
(86) International application number: PCT/US2018/037643
(87) International publication number: WO 2018/232186

(56) References cited:
- WO-A2-2015/022615
- DE-U1- 202006 011 502
- KR-A- 20170 047 866
- KR-B1- 101 259 488
- US-A- 5 590 024
- US-A1- 2009 316 351
- US-A1- 2013 163 195
- US-A1- 2015 133 204
- US-A1- 2015 194 833
- US-A1- 2016 205 804
- US-B2- 8 483 758
- US-B2- 8 952 566

## Description

### CROSS-REFERENCE TO RELATED APPLICATIONS

This application claims priority to, and the benefit of U.S. Provisional Patent Application No. 62/520,336 filed on June 15, 2017, and entitled "PORTABLE STORAGE DEVICE WITH MODULAR POWER AND HOUSING SYSTEM". This application also claims priority to U.S. Patent Application Serial No. 15/644,556 filed on July 7, 2017, and entitled PORTABLE STORAGE DEVICE WITH MODULAR POWER AND HOUSING SYSTEM" which claims priority to, and the benefit of U.S. Provisional Patent Application No. 62/520,336 filed on June 15, 2017, and is also a continuation-in-part of and claims priority to U.S. Patent Application Serial No. 14/745,100 filed on June 19, 2015, and entitled "SYSTEMS AND METHODS FOR PORTABLE STORAGE DEVICES" and which claims priority to, and the benefit of U.S. Provisional Patent Application No. 62/060,379 filed on October 6, 2015 and entitled "SYSTEMS AND METHODS FOR PORTABLE STORAGE DEVICES."

### FIELD

The present disclosure generally relates to portable storage devices, and more particularly to portable storage devices with modular components.

### BACKGROUND

Communication between devices is typically performed over a network, such as the internet or a local area network. However, networks may not always be available for communication between devices and additionally may expose communications to security breaches on the network. Devices enabled with Bluetooth^{®} may communicate directly. However, Bluetooth^{®} enabled devices must be within a limited range, and communication speeds may be relatively slow. Consumers may have files stored on one device and wish to access the files from another device. It may be difficult to transfer the file without an internet connection or using data on a data plan. Additionally, transferring the information may expose the information to hackers and security breaches.

Carrying storage devices can also be cumbersome even without concerns regarding data transfer. Most people are conditioned to check for a few items such as their keys, wallets, and phones when leaving a location. But USB sticks, for example, are easily misplaced and left behind. Losing storage devices is a security risk in addition to being inconvenient. Physical copies of data retained on a storage device get exposed when the device is recovered by a third party.

DE 20 2006 011 502 U1 describes a portable storage device.

### SUMMARY

A modular portable storage system is disclosed herein. The modular portable storage system includes a portable storage device with a housing having a cuboid geometry. The housing retains a processor, a storage module in electronic communication with the processor, and a wireless communication module. A circuit communicates electronically with the portable storage device. The portable storage device is removably coupled to the circuit board. A power supply is in electronic communication with the circuit board. The power supply is also removably coupled to the circuit board. The portable storage device and the power supply are removably retained within the external housing. The circuit board is mechanically coupled to the external housing.

In various embodiments, the portable storage device may further include a data port exposed from a first surface of the portable storage device. The portable storage device may also include conductive pads exposed from the first surface of the portable storage device. The data port may be disposed between at least two of the conductive pads. A case for a mobile device may define a cavity configured to retain the portable storage device. The case may further include an interface disposed in the cavity and configured for electronic coupling to at least one of the conductive pads or the data port. The case may also comprise a data plug in electronic communication with the interface and configured to engage a plug on the mobile device. The case may have a protrusion configured to house the cavity and/or the power supply.

A modular portable storage system may also include a portable storage device comprising a housing having a cuboid geometry. The housing may retain a processor, a storage module in electronic communication with the processor, and a wireless communication module. An electronic interface panel may be located on a surface of the portable storage device. The electronic interface panel may include a data port and/or a conductive pad. A case for a mobile device may include a cavity to retain the portable storage device.

In various embodiments, the cavity may have five orthogonal surfaces. The portable storage device may lay flush with an interior surface of the case in response to the portable storage device being inserted into the cavity. The case may further include an interface disposed in the cavity and electronically coupled to the electronic interface panel. The case may include a data plug in electronic communication with the interface and configured to engage a plug on the mobile device. The case may also comprise a protrusion disposed at an external surface and configured to house the cavity. The protrusion may be configured to house a power supply.

A portable storage device may include a processor, a circuit board coupled to the processor and in electronic communication with the processor, a non-transitory memory coupled to the circuit board and in electronic communication with the circuit board, a first wireless chip coupled to the circuit board and in electronic communication with the circuit board, wherein the first wireless chip may transmit data directly to a mobile device, a housing retaining the processor, the circuit board, the non-transitory memory, and the first wireless chip, wherein the housing is a cuboid defined by a height, a width, and a length.

In various embodiments, the height may be substantially 0.25 inches, the length may be substantially 2.4 inches, and the width may be substantially 1.75 inches. An electronic interface panel may be in electronic communication with the circuit board and disposed on a first surface of the portable storage device. The first surface may be defined by the height and the length of the portable storage device. A human interface panel may also be defined in a second surface with a button and/or a light source. The second surface may be defined by the length and the width of the portable storage device.

### BRIEF DESCRIPTION OF THE DRAWINGS

A more complete understanding may be derived by referring to the detailed description and claims when considered in connection with the Figures, wherein like reference numbers refer to similar elements throughout the Figures.
FIG. 1 illustrates a schematic diagram of a system for transmitting messages according to various embodiments of the disclosure;
FIG. 2 illustrates a process for transmitting data between devices according to various embodiments;
FIG. 3 illustrates a process for a file send protocol according to various embodiments;
FIG. 4 illustrates a discovery protocol according to various embodiments;
FIG. 5 illustrates a definition for a discovery protocol according to various embodiments;
FIG. 6 illustrates a definition for a file transfer request according to various embodiments;
FIG. 7 illustrates a definition for a response to a file transfer request according to various embodiments;
FIG. 8 illustrates a portable storage device according to various embodiments;
FIG. 9 illustrates a portable storage device communicating with a device according to various embodiments;
FIG. 10 illustrates a portable storage device syncing with a server according to various embodiments;
FIGs. 11A-11E illustrate a portable storage device suitable for electronic and mechanical coupling to various components in a modular portable storage system according to various embodiments;
FIG. 12A illustrates a printed circuit board device comprising multiple circuit boards in a stacked configuration according to various embodiments;
FIG. 12B illustrates a printed circuit board device comprising various chips and electronic components coupled to a circuit board according to various embodiments;
FIGs. 13A-13D illustrate a portable storage device assembly comprising an external housing, a power supply, and a portable storage device according to various embodiments;
FIGs. 14A-14D illustrate an internal electronics assembly of a portable storage device assembly according to various embodiments;
FIGs. 15A-15C illustrate a portable storage assembly comprising a case for mechanical attachment to a mobile device with a cavity suitable to retain a portable storage device according to various embodiments; and
FIG. 16 illustrates a modular portable storage system having a case, an external housing, a portable storage device, and a power supply reconfigurable into various storage arrangements according to various embodiments.

### DETAILED DESCRIPTION

The detailed description of exemplary embodiments herein makes reference to the accompanying drawings and pictures, which show various embodiments by way of illustration. While these various embodiments are described in sufficient detail to enable those skilled in the art to practice the disclosure, it should be understood that other embodiments may be realized and that logical and mechanical changes may be made without departing from the spirit and scope of the disclosure. Thus, the detailed description herein is presented for purposes of illustration only and not of limitation. For example, the steps recited in any of the method or process descriptions may be executed in any order and are not limited to the order presented. Moreover, any of the functions or steps may be outsourced to or performed by one or more third parties. Furthermore, any reference to singular includes plural embodiments, and any reference to more than one component may include a singular embodiment.

The present disclosure relates to systems, methods, and computer program products. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described. After reading the description, it will be apparent to one skilled in the relevant art(s) how to implement the disclosure in alternative embodiments.

Systems and methods are disclosed herein for communication between a portable content repository and computing devices. A portable storage device may serve as a content repository by retaining content for access by other devices. Various computing devices may read, write, and/or execute content stored on the portable storage device. Although the portable storage device may "permanently" store the content, the various computing devices accessing content on the portable storage device retain the content temporarily and/or with access controls in place. The portable storage device may thus be described as a content repository device. Content repository devices of the present disclosure may use a standardized communication system ("SCS") as described herein. The portable storage device may also be reconfigurable relative to various components

The systems and methods disclosed herein may enable communication between devices without connection to the Internet or other networks using an SCS. An SCS may be operable on the computing devices of the present disclosure. The SCS may comprise any combination of hardware and/or software. The SCS may utilize existing physical components of the device, such as 802.11 or 802.2(2) wireless chips and Bluetooth^{®} systems in order to communicate with other devices. The SCS may be suitable for any communication protocol, such as IP, TCP/UDP, Bluetooth^{®}, raw Manchester encoding, and any other form of wireless communication.

The SCS may allow communication between devices of varying types and platforms. Additionally, as communication may happen directly between devices without transmitting data across a network, communication may be available when networks are unavailable, and communications may be protected from eavesdroppers on a network. Furthermore, direct communication between devices may avoid data charges on cellular data plans.

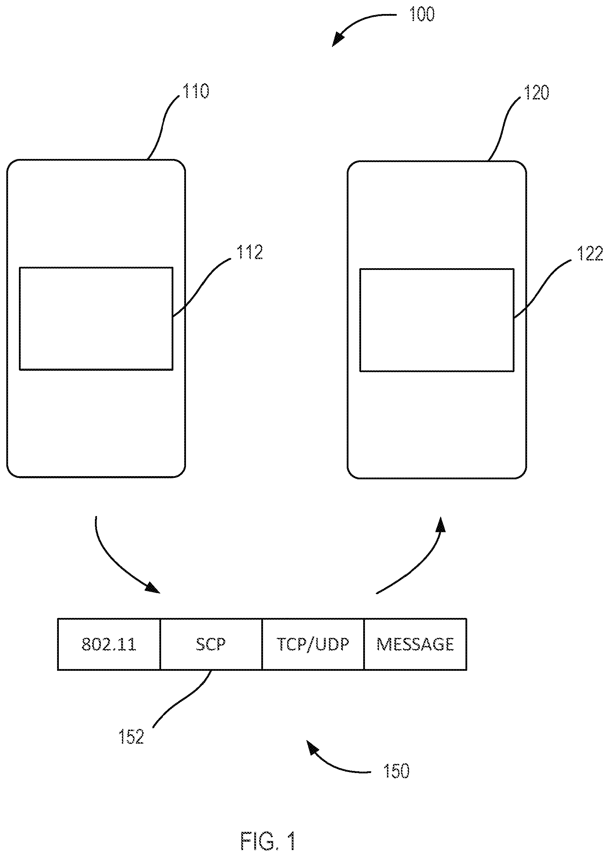

Referring to FIG. 1, a system 100 for transmitting messages is illustrated according to various embodiments. A first device 110 comprising an SCS 112 and a second device 120 comprising an SCS 122 are illustrated according to various embodiments. In various embodiments, SCS 112 and SCS 122 may be aftermarket software programs installed on first device 110 and second device 120. For example, a user may download an SCS app onto a smartphone or other device. However, in various embodiments, SCS 112 and SCS 122 may be embedded into a chip, such as an 802.11 wireless chip, in first device 110 and/or second device 120.

In various embodiments, the SCS may implement a standardized communication protocol ("SCP") on a device. The SCP may attach an SCP header 152 to a packet in order to identify a datagram 150 as an SCP datagram. First device 110 may communicate with second device 120 via SCP. The SCS may recognize the SCP header and may follow the SCP. The SCP may define the ability for devices to discover one another, to request the transfer of raw data, to transmit confirmations on receipt of data, and to perform any other steps involved with transmitting data.

In various embodiments, the SCS may be implemented at the network layer in the Open Systems Interconnection ("OSI") model (or the Internet layer in the TCP/IP model). Regardless of the protocol being used at the transport layer (e.g. TCP, UDP, SCTP, DCCP), the SCP header may allow devices comprising an SCS to communicate via SCP.

In various embodiments, at least one of first device 110 and second device 120 may comprise a smartphone. However, in various embodiments, first device 110 and second device 120 may comprise any type of device capable of transmitting and/or receiving data.

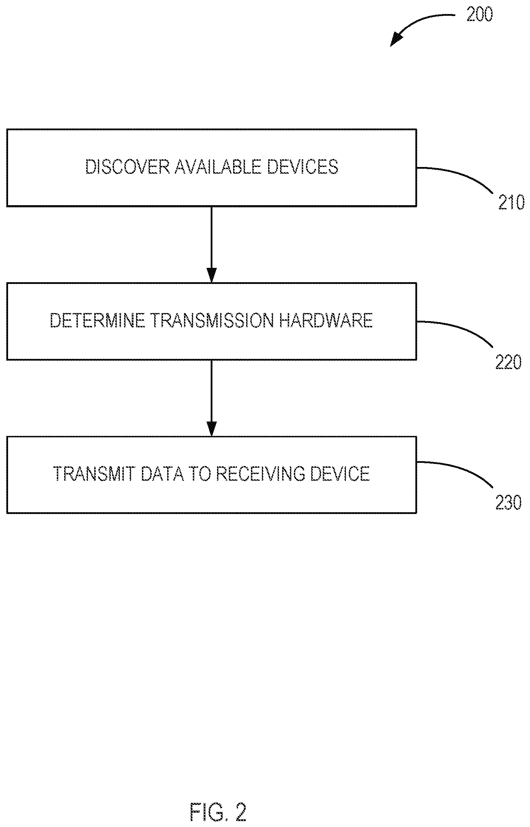

Referring to FIG. 2, a process 200 for transmitting data between devices is illustrated according to various embodiments. In various embodiments, a first user may wish to transmit data from first device 110 to second device 120. The data may comprise any type of data, such as a text message, image, video, text document, or any other type of file.

First device 110 may discover available devices (step 210). First device 110 may attempt to discover other devices by a variety of methods. In various embodiments, first device 110 may discover other devices via a camera or other optical device. In various embodiments, second device 120 may display a symbol, such as a QR-code, a barcode, or text. The symbol may comprise identifying characteristics about second device 120. For example, in various embodiments the identifying characteristics may comprise at least one of a device name, an IP address of the device, an owner name, an endpoint of the device, and the available transport layers on the device. First device 110 may scan the symbol using a camera. First device 110 may obtain the identifying characteristics from the symbol and use the identifying characteristics in order to transmit data to second device 120.

In various embodiments, the SCS on first device 110 may search for other devices using a wireless chip in first device 110. Devices comprising an SCS may transmit a broadcast message. The broadcast message may comprise the identifying characteristics of the device. In various embodiments, first device 110 may be within transmission range of second device 120. The transmission range may depend on the specific type of wireless chips in first device 110 and second device 120. However, in various embodiments, the transmission range may be up to about 200 feet - 300 feet. The SCS may open a socket on first device 110 to listen for broadcast messages. The broadcast message may be sent by a variety of hardware. For example, the broadcast message may be transmitted via an 802.11 wireless chip, Bluetooth^{®} chip, or NFC.

In various embodiments, first device 110 and second device 120 may not be within transmission range of each other. However, an intermediary device, such as a smartphone equipped with hotspot technology, may be within transmission range of first device 110. First device 110 may search for available devices by transmitting a message to intermediary device, instructing intermediary device to look for available devices. Intermediary device may receive a broadcast message from second device 120, and intermediary device may transmit the broadcast message to first device 110. Thus, first device 110 may discover second device 120 without connecting to the internet or a cellular network even though first device 110 may not be within transmission range of second device 120. In various embodiments, any number of intermediary devices may be daisy-chained, such that first device 110 may discover second device 120 from miles apart by transmitting data via a series of intermediary devices.

First device 110 may display a list of all discovered devices to the user. The user may select second device 120 in order to transmit data to second device 120. The user may select a file or message to be transmitted to second device 120.

The SCS 112 on first device 110 may determine the transmission hardware to utilize for the transmission (step 220). In various embodiments, first device 110 and second device 120 may each have only one type of transmission hardware, such as an 802.11 wireless chip, and the SCS 112 may thus select the 802.11 wireless chip to transmit the data. However, in various embodiments, multiple transmission paths may be available between first device 110 and second device 120. For example, first device 110 and second device 120 may each comprise an 802.11 wireless chip and a Bluetooth^{®} chip. In various embodiments, the SCS 112 may determine the fastest transmission path, and may select the fastest transmission path to transmit the data. In various embodiments, the transmission path may be selected by default settings. For example, SCS 112 may always select an 802.11 wireless path for transmission when available, and if the 802.11 wireless path is not available, SCS 112 may select a Bluetooth^{®} path. However, in various embodiments, the SCS 112 on first device 110 may transmit a speed test message to second device 120 via each available transmission path, and the SCS 112 may select the fastest transmission path based on the speed test results.

In various embodiments, the SCS 112 may instruct first device 110 to send the data to second device 120 via multiple transmission paths. A message may be divided into multiple packets. SCS 112 may analyze the available transmissions paths, and send the message over multiple transmission paths in order to expedite transmission of the entire message. For example, SCS 112 may determine that the fastest method of transmitting the message may be to transmit 90% of the packets via an 802.11 wireless path, and 10% of the packets over a Bluetooth^{®} path. SCS 112 may attach an SCP header to each packet being transmitted to second device 120, whether via 802.11 wireless or Bluetooth^{®}. Thus, SCS 122 on second device 120 may recognize the packets as being received by SCP, and SCS 122 may reassemble the packets in order to recreate the entire message. In various embodiments, SCS 112 may analyze all transmission paths available, including but not limited to multiple 802.11 wireless chips, Bluetooth^{®} chips, NFC, PDQ, or any other transmission paths in order to select the fastest transmission method. The SCS on first device 110 may initiate a file send protocol and transmit the data to second device 120 (step 230).

In various embodiments, first device 110 and second device 120 may be connected to the same local network. First device 110 may transmit a link, such as a QR-code, over a cellular network or the local network to second device 120. In various embodiments, the link may comprise 10kb or less of data. Second device 120 may use the link to request or accept a file transfer. First device 110 may transmit a file over the local network. In various embodiments, the file may be transferred using TCP/IP directly over the local network.

In various embodiments, second device 120 may have access to an internet connection. First device 110 may transmit a link over a cellular transmission path to second device 120, and second device 120 may use the link to download a file stored on the cloud and/or on a server over the internet. In various embodiments, second device 120 may download the file using TCP/IP.

In various embodiments, first device 110 may sync its contents with a cloud database. In various embodiments, first device 110 may comprise an SCS folder, and only files stored in the SCS folder may be synced with the database. First device 110 may transmit a link over a cellular transmission path to second device 120 identifying a file stored on the database. In various embodiments, second device 120 may not have access to an 802.11 wireless network at the time second device 120 receives the link. Second device 120 may use the link to access the file whenever second device 120 gains access to an 802.11 wireless network in order to prevent cellular data charges. In various embodiments, second device 120 may use the link to access the file over the cellular network. In various embodiments, second device 120 may stream all or part of the file over either the cellular network or an 802.11 wireless network.

In various embodiments, first device 110 may share an online folder with second device 120. First device 110 may indicate that second device 120 may have access to an online folder. First device 110 may sync with the online folder to upload files stored on first device 110 to the online folder. Second device 120 may sync with the online folder to download files stored in the online folder to second device 120.

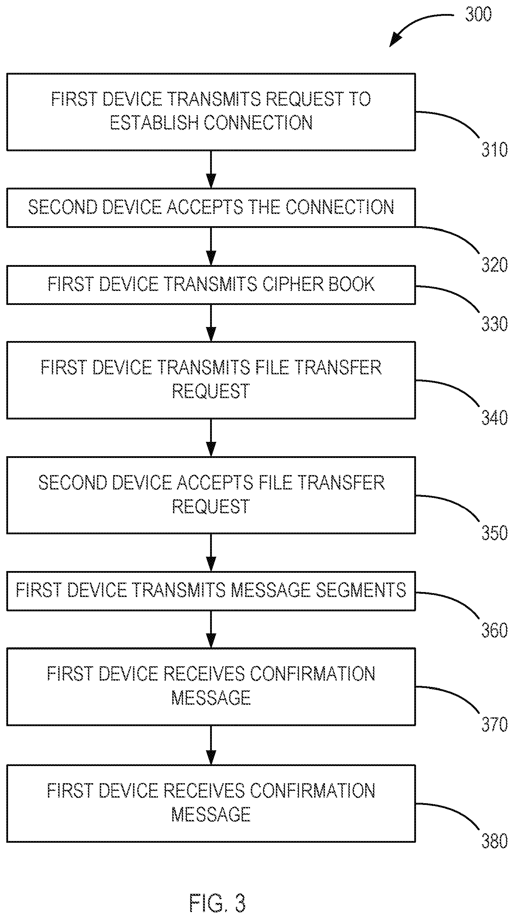

Referring to FIG. 3, a process 300 for a file send protocol is illustrated according to various embodiments. First device 110 may transmit a request to establish a connection with second device 120 (step 310). In various embodiments the connection may comprise a TCP connection. However, in various embodiments, the connection may comprise any type of connection for transmitting data between devices. Second device 120 may accept the connection request (step 320). In various embodiments, the connection may be between secure sockets on first device 110 and second device 120.

In various embodiments, first device 110 may transmit a message comprising a cypher book to second device 120 (step 330). The cypher book may comprise a list of one-time cyphers, and may allow second device 120 to decrypt data sent to second device 120 over the secure socket connection using one time cyphers. In various embodiments, first device 110 may encrypt the message comprising the cypher book using known encryption methods, such as Advanced Encryption Standard ("AES") or RSA encryption. However, subsequent messages during the transfer session may be encrypted using the one-time cyphers contained in the cypher book. The messages encrypted using the one-time cyphers may be encrypted and decrypted using significantly less processing power and time than messages encrypted with AES or RSA. Additionally, the messages sent using the one-time cyphers may be indecipherable to parties not containing the cypher book.

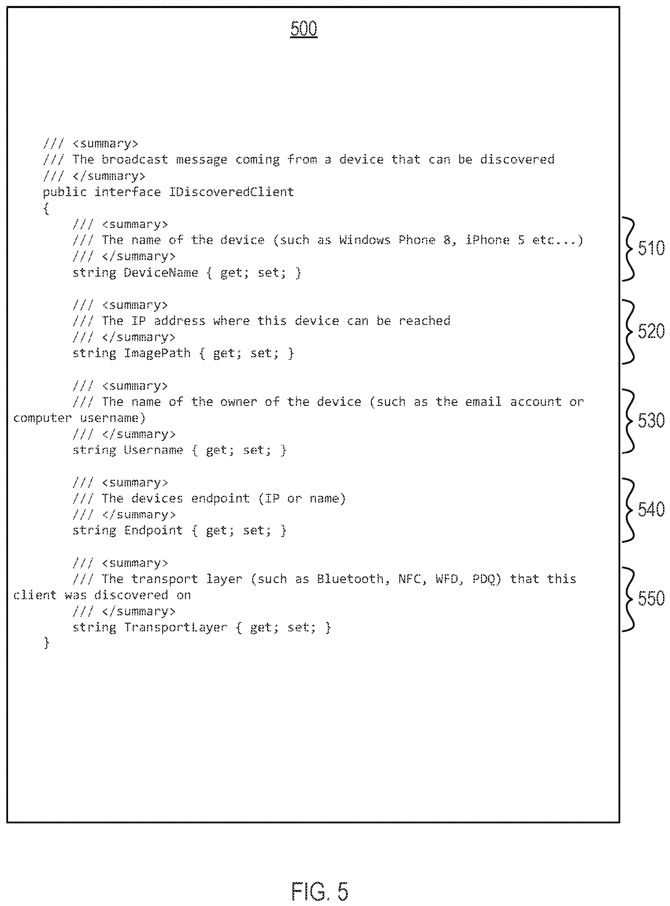

First device 110 may send a file transfer request (step 340). For an example of a file transfer request, refer to FIG. 5. Second device 120 may accept the file transfer request (step 350). In response to second device 120 accepting the file transfer request, first device 110 may break the file into segments, and begin transmitting the segments to second device 120 (step 360). After first device 110 has transmitted all segments of the file, first device 110 may wait for confirmation that second device 120 has received all segments. Second device 120 may transmit a confirmation message to first device 110 indicating that all segments have been received (step 370). Second device 120 may decrypt and reassemble the segments according to SCP in order to recreate the file (step 380).

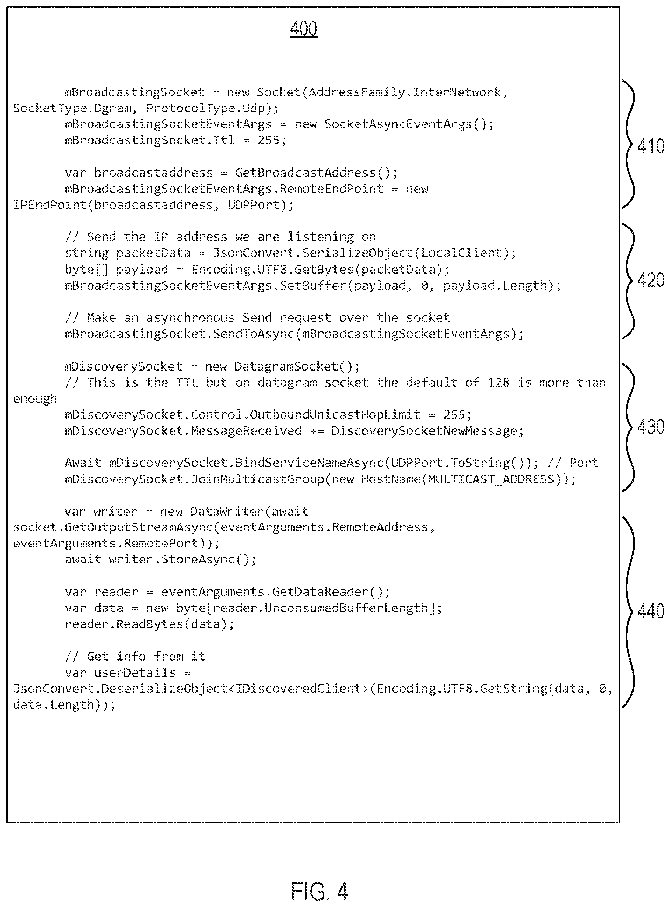

Referring to FIG. 4, an example of a discovery protocol 400 is illustrated according to various embodiments. Discovery protocol 400 may be implemented on the transport layer using TCP/UDP. However, in various embodiments, discovery protocols may be implemented using a Bluetooth^{®} serial port, RS-232, or may be sent entirely over datagrams or a Windows^{®} Socket API ("WSA"). The LocalClient in the illustrated embodiment may be a new instance of an IDiscoveredClient (defined in FIG. 5) class filled in with the device's identifying characteristics, such as device name, user name, preview image, and endpoint (in this case an IP address and port). First device 110 may open a new socket for a broadcast message (410). First device 110 may transmit the IP address that first device 110 is listening on for a response to the broadcast message (420). First device 110 may open a new datagram socket to listen for a response message (430). After receiving a response message, first device 110 may decipher the response message into the original IDiscoveredClient message that first device 110 sent (440).

Referring to FIG. 5, a definition for an example discovery protocol 500 is illustrated according to various embodiments. The definition may be a single common class called IDiscoveredClient that may be implemented by a transmitting device and a receiving device. In various embodiments, the definition may be expanded to include custom fields and any other information that users may desire. In various embodiments, the definition may comprise a name of the device (510), an IP address of the device (520), an owner of the device (530), an endpoint of the device (540), and a transport layer on which the device was discovered (550). However, one skilled in the art will appreciate that the particular fields used may be altered to any desired fields.

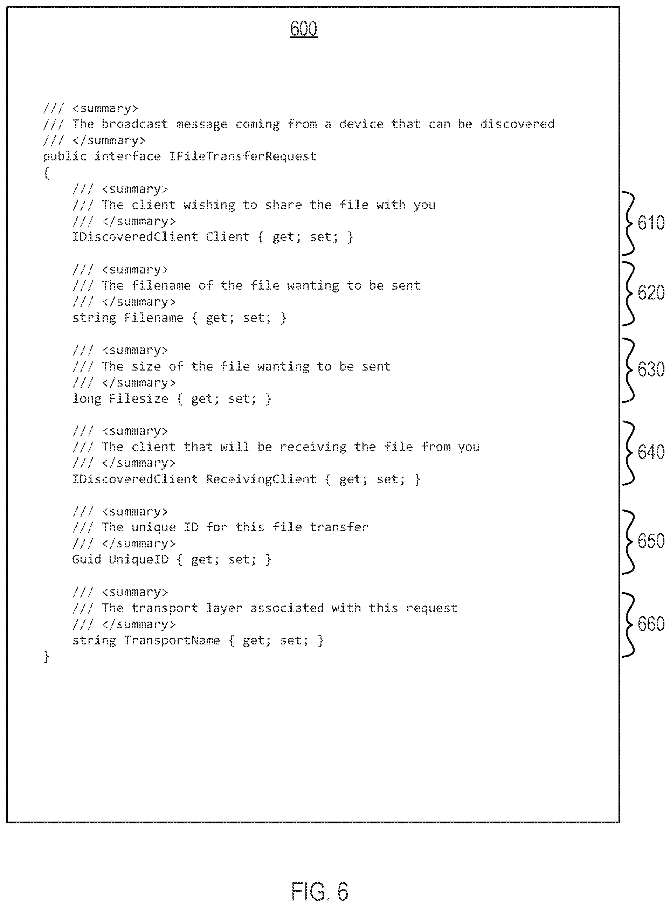

Referring to FIG. 6, a definition for an example file transfer request protocol 600 is illustrated according to various embodiments. The definition may be called "IFileTransferRequest." In various embodiments, the definition may comprise the name of the device transmitting a file (610), the filename to be sent (620), the size of the file (630), the device receiving the file (640), a unique identification for the file transfer (650), and the transport layer associated with the file transfer (660).

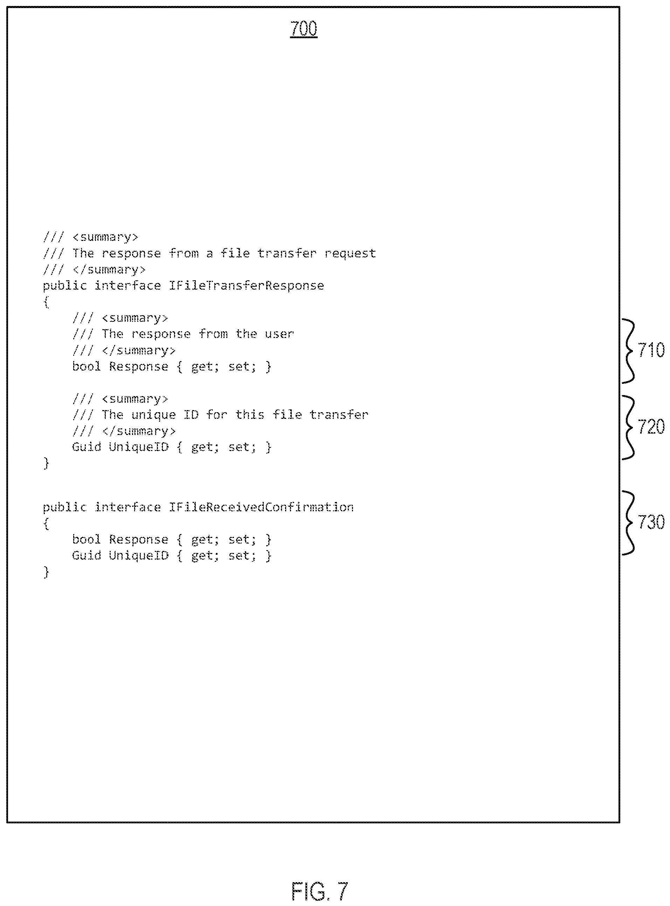

Referring to FIG. 7, a definition for a response to a file transfer request 700 is illustrated according to various embodiments. The receiving device may respond with a definition called IFileTransferResponse to indicate that the receiving device is willing to accept the file transfer. In various embodiments, IFileTransferResponse may comprise the response from the user (710) and the unique identification for the file transfer (720). The transmitting device may receive the response from the receiving device, and the transmitting device may proceed to transmit the file to the receiving device. Once a complete file transfer has occurred, the receiving device may transmit a confirmation to the transmitting device (730).

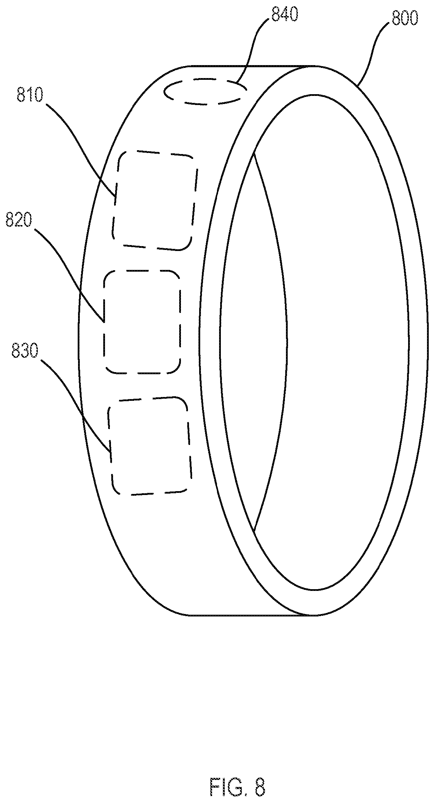

Referring to FIG. 8, a portable storage device ("PSD") 800 is illustrated according to various embodiments. The PSD 800 may be a wearable device, such as a wrist band or bracelet as illustrated in FIG. 8. However, PSDs may be any type of portable device which is capable of storing information. For example, a PSD may comprise a watch, necklace, phone case, smartphone, implanted chips, clothing item, wallet, etc.

The PSD 800 may comprise a storage module 810, a communication module 820, a processor 830, and a battery 840. The storage module 810 may comprise a memory card. For example, the storage module 810 may comprise an SD card, an xD card, a CompactFlash card, or any other suitable memory card. The storage module 810 may comprise an internal memory, such as iSSD, SSD, iNAND, or flash SD. The communication module 820 may comprise one or more components capable of wireless communication. For example, the communication module may comprise an 802.11 or 802.2(2) wireless chip, a Bluetooth^{®} chip, an NFC chip, etc. The processor 830 may comprise any combination of hardware and/or software capable of providing instructions to the storage module 810 and the communication module 820. In various embodiments, the storage module 810, the communication module 820, and the processor 830 may be embedded within the PSD 800, such that the PSD 800 does not have any visible electronic components. In various embodiments, the PSD 800 may comprise a waterproof coating, such as rubber or silicone.

The PSD 800 may comprise a standard communication system ("SCS") as previously described herein. The SCS may be any combination of hardware and/or software which is capable of communicating via a standard communication protocol ("SCP") as previously described herein. In various embodiments, the SCS may be implemented on at least one of the storage module 810, the communication module 820, or the processor 830.

The PSD 800 may wirelessly receive and transmit files and communications from other devices, such as smartphones, televisions, game consoles, tablets, personal computers, printers, etc. Due to the SCS, the PSD 800 may not be limited to communicating with any particular brand or manufacturer of device. In contrast, the PSD 800 may communicate across platforms, such as with Apple^{®} devices, Android^{®} devices, Windows^{®} devices, UNIX^{®} devices, or any other suitable devices.

In various embodiments, the PSD 800 may allow a user to access their files wherever the user goes. For example, a user may have a document stored on a laptop computer. The user may transmit the document from the laptop computer to the PSD 800 using the SCS. The PSD 800 may store the document in the storage module 810. The user may then transmit the document from the PSD 800 to another device, such as a smartphone, using the SCS.

In various embodiments, the PSD 800 may communicate directly with other devices without using a network. Thus, information may be transmitted securely between the PSD 800 and other devices. However, in various embodiments, the PSD 800 may communicate over a network using a wireless chip in the communication module 820. The communication module 820 may comprise two wireless chips, allowing the PSD 800 to simultaneously communicate over a network on a first wireless chip and directly to another device on a second wireless chip.

In various embodiments, the PSD 800 may allow data to be transferred from a device to the PSD 800 without storing the data on the device. For example, a smartphone may capture a picture and transmit the picture directly to the PSD 800 using the smartphone's RAM without storing the picture on the hard drive of the smartphone. Thus, the smartphone may be lost, stolen, sold, or donated without risk of a third-party obtaining the picture, or other data which is stored on the PSD 800 and not the smartphone. Similarly, a user may initiate an SCS on a device, such as a laptop, and open a file stored on the PSD 800 using the device. The user may edit the file on the device and save the edited file directly on the PSD 800 without saving the edited file on the device.

A user may use the PSD 800 to store all of the user's files. Regardless of what device a user is using to access the files on the PSD 800, the user may create, edit, and delete files directly on the PSD 800 using another device, such as a personal computer.

In various embodiments, the PSD 800 may emulate a network drive. Thus, the PSD 800 may be able to communicate with devices which are not capable of downloading or installing custom software. For example, the PSD 800 may emulate a DLNA media service, or a Windows^{®} network. The PSD 800 may require a password to be entered on the device, and the device may then access files stored on the PSD 800.

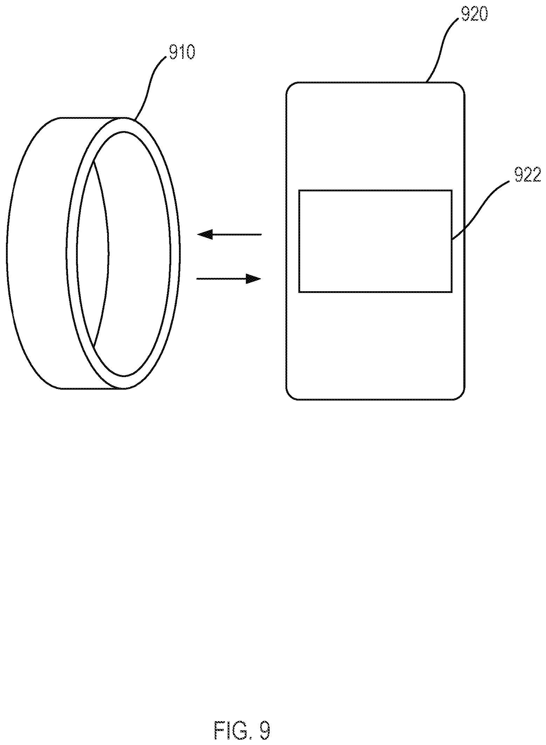

Referring to FIG. 9, a PSD 910 and a device 920 comprising an SCS 922 are illustrated according to various embodiments. In various embodiments, the device 920 may be the first device 110 described with reference to FIG. 1. However, the device 920 may comprise any device capable of communicating with the PSD 910 using an SCP. A user may login to the SCS 922, and the device 920 may request an access key. In various embodiments, the device 920 may request the access key from a server over an internet or cellular connection. However, in various embodiments, the PSD 910 may have one or more stored access keys on the PSD 910, and the device 920 may request the stored access key from the PSD 910. The PSD 910 may transmit the stored access key to the device 920, and the device 920 may use the stored access key to encrypt and/or decrypt data transmitted between the device 920 and the PSD 910. In various embodiments, the access key may be a temporary key which may expire after a set amount of time. The user may view the files stored on the PSD 910, and the user may upload or download files between the PSD 910 and the device 920. In various embodiments, the PSD 910 may stream a file, such as an audio or video file, to the device 920. Once a file is stored on the PSD 910, the user may access the file with any device within communication range of the PSD 910. In various embodiments, a file may be streamed cross-platform. For example, a user may purchase an audio file via iTunes^{®} on an Apple^{®} device. The user may transmit the audio file to the PSD 910 using the SCP. The PSD 910 may stream the audio file from the PSD 910 to a non-Apple^{®} device, regardless of the operating system, using the SCP.

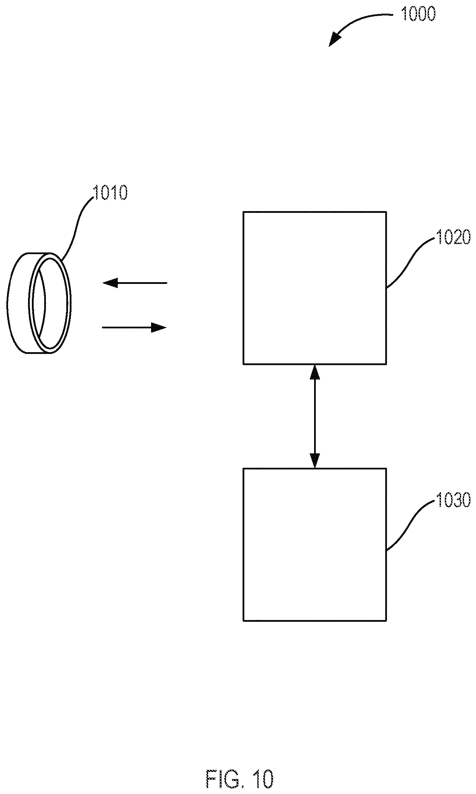

Referring to FIG. 10, a system 1000 for backing up data on a PSD 1010 is illustrated according to various embodiments. The PSD 1010 may establish a connection with a device 1020. In various embodiments, the device 1020 may comprise any type of device capable of communicating with a server 1030. For example, the device 1020 may comprise a personal computer, a smartphone, or a wireless router. The device 1020 may communicate with the server 1030 over a network. In various embodiments, the server 1030 may comprise a cloud computing system.

The device 1020 may comprise an SCS. The PSD 1010 may communicate with the device 1020 utilizing the SCS. A user may log into the SCS on the device 1020, and instruct the PSD 1010 to sync with the server 1030. The PSD 1010 may transmit any new or edited files to the server 1030 via the device 1020. The files may be associated with a user account and stored on the server 1030. In various embodiments, any new or edited files associated with the user account may be downloaded from the server 1030 and transmitted to the PSD 1010 via the device 1020. Once the PSD 1010 is synced with the server 1030, a user may access a file by either logging into the user account with any device over the internet, or the user may access the file by accessing the PSD 1010 with a device.

In various embodiments, the PSD 1010 may automatically sync when charging, and may charge wirelessly or on a charging cable. The PSD 1010 may reach a predefined battery level prior to initiating the sync. For example, when placed on a charger, the PSD 1010 may initiate a sync in response to the battery level reach at least 50%, or at least 90%. The PSD 1010 may sync to any location specified by a user, such as the server 1030, a local device, or another PSD.

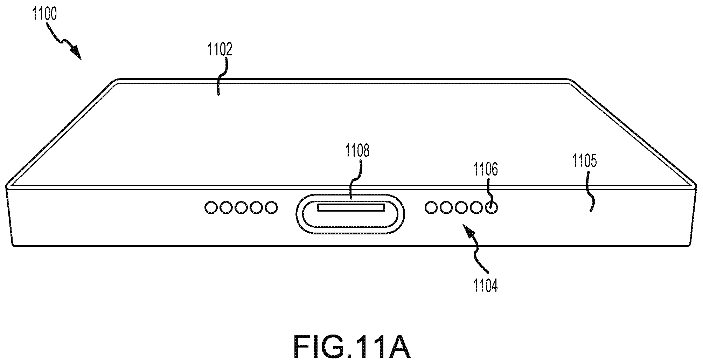

With reference to FIGs. 11A-11E a portable storage device 1100 is shown with modular components, in accordance with various embodiments. Portable storage device 1100 may include features and functionality described herein. Portable storage device 1100 has a housing 1102. Housing 1102 may be made from materials including metals, plastics, and/or rubbers. For example, housing 1102 may be made from stamped and fused sheets of aluminum, molded plastic, or other suitable materials. Housing 1102 may also be made from thermally conductive materials to enhance heat dissipation.

In various embodiments, housing 1102 may have rectangular cuboid geometry or rhomboid geometry with 6 sides. Each side may have dimensions substantially congruent to the side opposite each side's internal surface. In that regard, housing 1102 may comprise three pairs of sides having similar dimensions.

In various embodiments, the surfaces of housing 1102 may leave exposed various interfaces and components. For example, surface 1105 of housing 1102 may include electronic interface panel 1104. Electronic interface panel 1104 may further include conductive pads 1106 disposed slightly proud from, flush with, or slightly recessed from surface 1105. Conductive pads 1106 may form an electrical connection with conductive pins and/or conductive pads formed on an opposing surface in contact with or near to surface 1105.

In various embodiments, electronic interface panel 1104 may further comprise a data port 1108 exposed from housing 1102. Data port 1108 may be configured to transmit power and/or signals over electronic connections in a predetermined format. For example, data port 1108 may use a protocol such as USB, firewire, lightning cable, SATA, PCIe, or other suitable cable interface for data and/or power transfer. Data port 108 may also use a proprietary pin configuration and slot geometry.

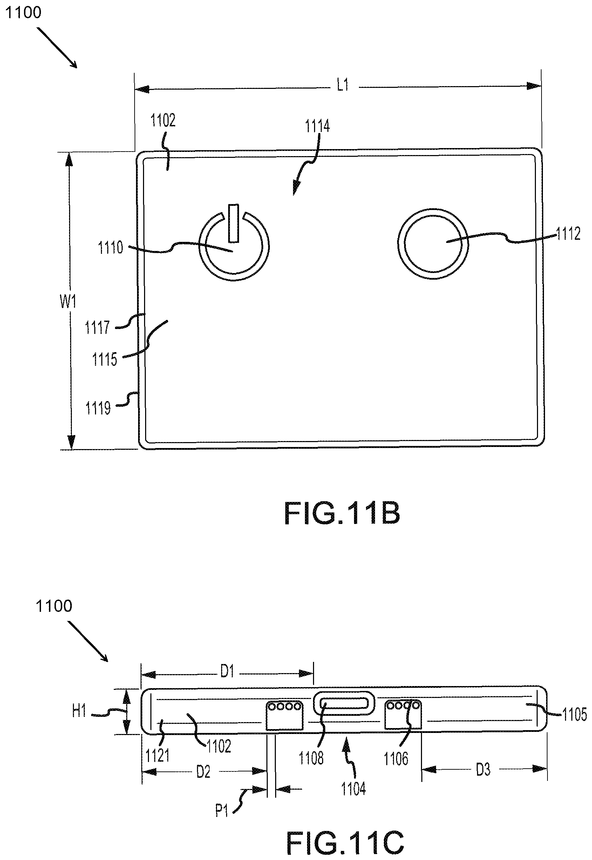

In various embodiments, housing 1102 may further include surface 1115 having a rectangular geometry as depicted in a top view by FIG. 11B. Surface 1115 may include human I/O interface 1114 comprising a power button and/or light source 1110 and an interface button and/or light source 1112. Lighting may come from a light emitting diode or other low energy consumption lighting source. Power button 1110 and interface button 1112 may comprise capacitive touch buttons, actuating buttons, or other input mechanisms suitable for touch control by a user. Housing 1102 may also retain a microphone or other I/O device in various embodiments so that users may thus interact with portable storage device 1100 using voice commands, for example.

In various embodiments, surface 1115 may have a width W₁ and a Length L₁. Width W₁ may be a length of substantially 1.75 inches, for example. Length L₁ may be a length of substantially 2.4 inches, for example. As used herein to describe a dimension, the term "substantially" describes a variance in the stated dimension of +/- 5%, +/- 10%, +/- 15%, or +/-20%. Furthermore, the dimensions disclosed herein are given for exemplary purposes and are not intended to be limiting. The small dimensions of portable storage device 1100 may lend it to use in a modular storage and power solution described in greater detail below. The perimeter of surface 1115 as well as other surfaces of housing 1102 may be bounded by rounded edges 1119.

Referring now to FIG. 11C, an elevation view of housing 1102 is shown, in accordance with various embodiments. Surface 1121 of housing 1102 may have a height H₁. Height H1 may have a length of substantially 0.25 inches, for example. Electronic interface panel 1104 may also be defined in surface 1121 with conductive pads 1106 and data port 1108 exposed from surface 1121. The components defined in surface 1121 may be displaced from the edges of surface 1121 at symmetric and/or asymmetric locations on surface 1121. For example, data port 1108 may be offset from an edge of housing 1102 by a distance D₁. Distance D₁ may be substantially 1.025 inches, for example. Conductive pads may be offset from a first edge of housing 1102 by a distance D₂, and from a second edge of housing 1102 by a distance D₃. Distance D₂ and/or distance D₃ may be substantially 0.775 inches, for example. Distances D₂ and D₃ may also vary slightly such that D₂ is greater than or less than D₃. Conductive pads 1106 may have a pitch P₁. Pitch as used herein is defined to be the distance between successive corresponding points on adjacent conductive pads 1106. Pitch may describe the distance between the midpoints of adjacent conductive pads 1106, for example.

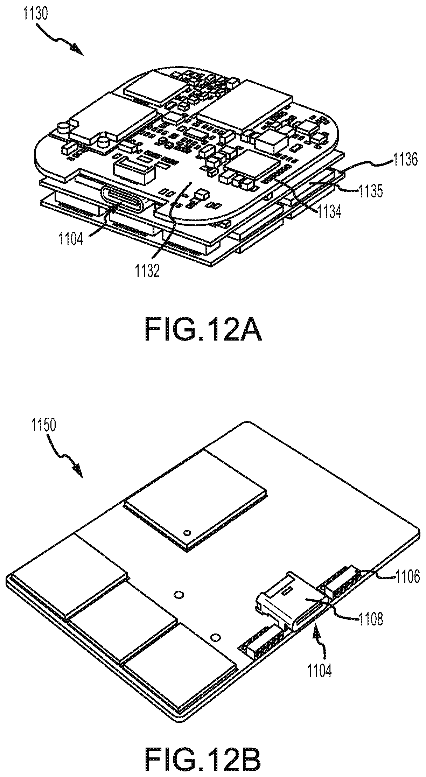

Referring now to FIGs. 12A and 12B, examples of internal components of portable storage device 1100 (of FIGs. 11A-11E) is shown, in accordance with various embodiments. FIG. 12A illustrates a printed circuit board (PCB) device 1130 having a stacked configuration. PCB device 1130 may include a main board 1132 having an electronic interface panel 1104 and various semiconductor chips suitable for wireless communication, processing, wired communication, storage access, or other otherwise providing functionality described herein. The semiconductor chips may be packaged as depicted using various packaging configurations such as ball grid array, flip chip, bumps-on-die, or other suitable techniques. One or more secondary PCBs 1134 and 1136 may be stacked with main board 1132. Secondary PCBs may include printed circuits, wires, and connections to various memory devices 1135 capable of storing digital data. PCB device 1130 may be retained partially or completely within housing 1102 (of FIGs. 11A-11E).

With reference to FIG. 12B, PCB device 1150 is shown, in accordance with various embodiments. PCB device 1150 includes various semiconductor chips as described above with reference to PCB device 1130. PCB device 1150 may have a smaller form-factor than PCB device 1130 based in part on PCB device 1150 using a single board construction. Electronic interface panel 1104 may include conductive pads 1106 and data port 1108 soldered or otherwise connected to PCB device 1150 to effect electronic communication with PCB device 1150. Similar to PCB device 1130 described above, PCB device 1150 may be retained within portable storage device 1100 (of FIGs. 11A-11E) to enable the functionality of the portable storage device described herein. Housing 1102 may thus removably or permanently enclose the PCB devices of FIGs. 12A and 12B depending on the configuration of housing 1102.

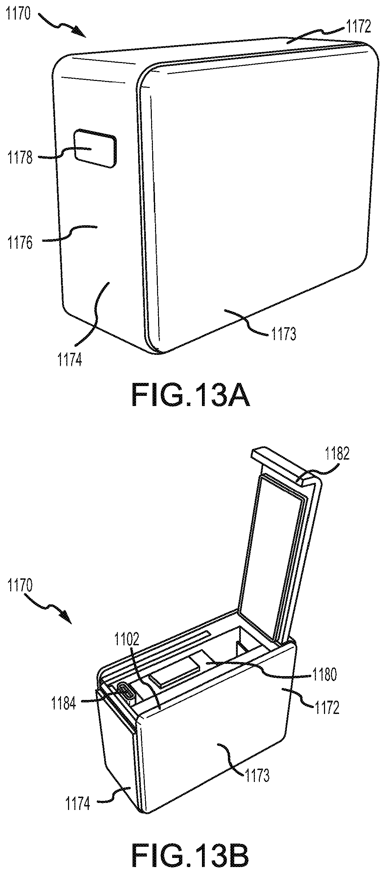

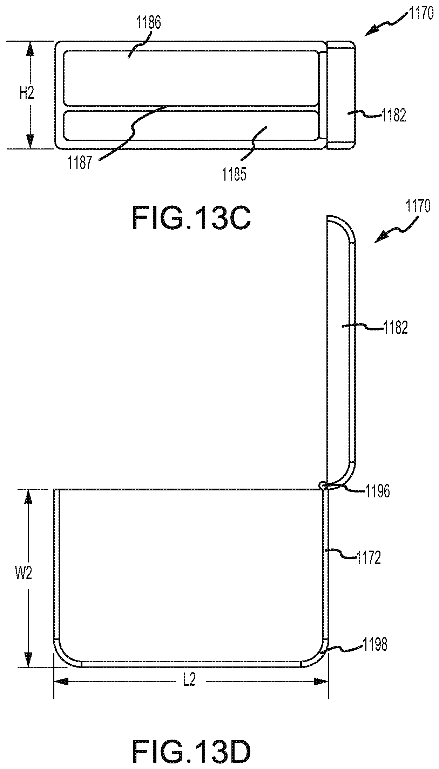

With reference to FIGs. 13A-13D, a portable storage device assembly 1170 that supports modular configurations including portable storage device 1100 (of FIGs. 11A-11E) is shown, in accordance with various embodiments. Portable storage device assembly 1170 comprises an external housing 1172 that retains various components and protects the components from environmental hazards.

In various embodiments, components retained within external housing 1172 include portable storage device 1100 and/or power supply 1180. Portable storage device 1100 and/or power supply 1180 are removably coupled to external housing 1172. Power supply 1180 may comprise a battery and/or a wireless power receiver suitable for powering portable storage device 1100 and/or providing supplemental power to external devices via port 1184. Cap 1182 of external housing may be pivotally coupled to external housing 1172 by a pivot joint 1196 comprising a pin in a circular sleeve, for example.

In various embodiments, external housing 1172 has a rectangular cuboid or rhomboid geometry larger than that of a portable storage device 1100 to be retained within the external housing. External housing 1172 may comprise a height H₂, a width W₂, and a length L₂. Height H₂ may be substantially 1 inch, for example. Width W₂ may be substantially 1.65 inches, for example. Length L₂ may be substantially 2.55 inches, for example.

In various embodiments, external housing may include an interface button 1178 and/or lighting 1176 in surface 1174 to facilitate communication with internals. Surface 1174, surface 1173, and/or cap 1182 may be finished with a variety of materials such as, for example, plastics, rubbers, synthetic materials, natural materials, or other suitable materials. For example, surface 1174 may comprise a smooth plastic with translucent and/or transparent portions to allow light to pass through surface 1174. External housing may also define internal cavity 1185 suitable for retaining portable storage device 1100 and/or internal cavity 1186 suitable for retaining a power supply 1180. A divider 1187 may separate internal cavity 1185 from internal cavity 1186 in various embodiments.

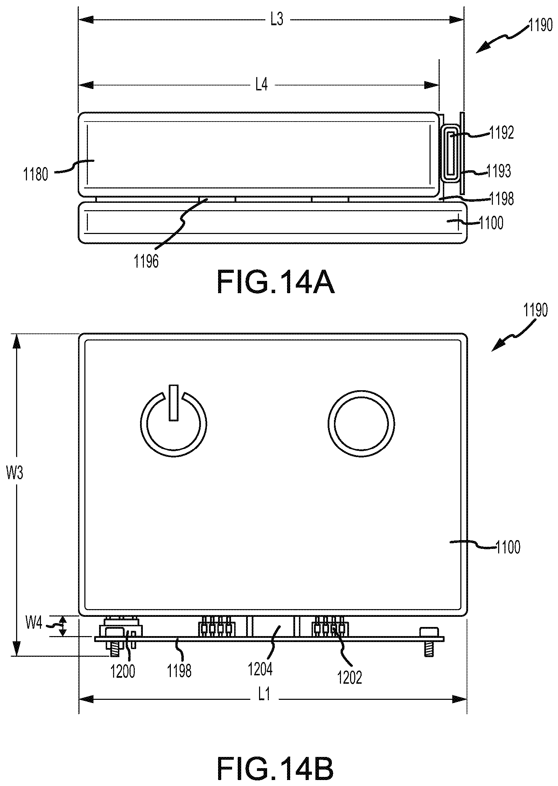

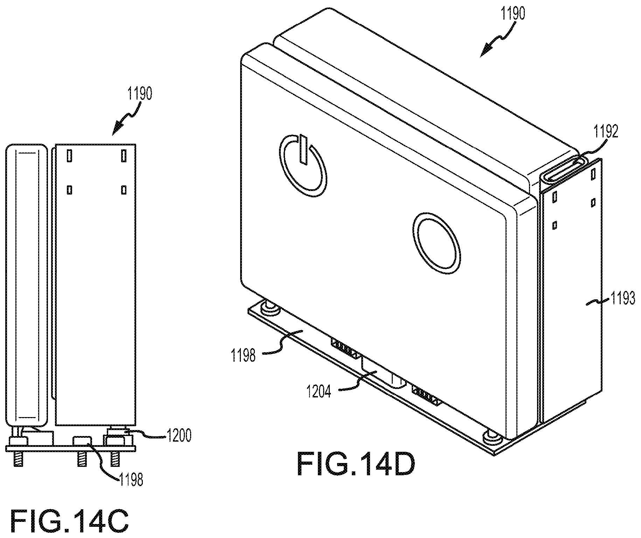

Referring now to FIGs. 14A-14D, an internal assembly 1190 is shown for electronic communication of power and/or data between power supply 1180 and portable storage device 1100 through PCB 1198. Internal assembly 1190 may be at least partially mounted, molded, bonded, glued, adhered, fastened, press fit, or otherwise mechanically coupled to external housing 1172 to form portable storage device assembly 1170 (of FIGs. 13A-13D). Internal assembly 1190 thus has dimensions suitable for retention within external housing 1172.

In various embodiments, power supply 1180, data port 1192, and PCB 1193 of internal assembly 1190 may have a combined length L₃, while power supply 1180 alone may have a shorter length L₄. Length L₃ may be substantially 2.39 inches, for example. Length L₄ may be substantially 2.225 inches, for example. The length of PCB 1193 and data port 1192 may be the difference between L₃ and L₄. Internal assembly 1190 may also have a width W₃, while PCB 1198, connector 1200, data adapter 1204, and conductive leads 1202 stand off from portable storage device 1100 by a width W₄. Width W₃ may be, for example, substantially 1.99 inches. Width W₄ may be, for example, substantially 0.12 inches.

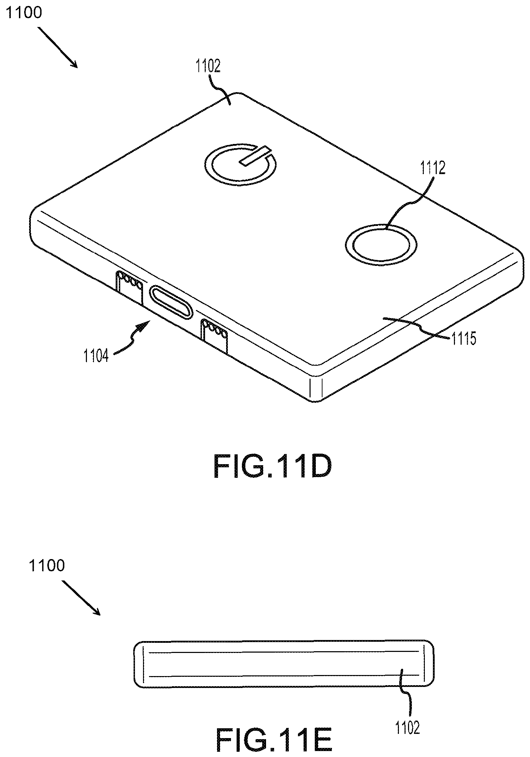

In various embodiments, data adapter 1204 may engage, mate with, and/or form an electrical connection with data port 1108 (of FIG. 11). Conductive leads 1202 may engage, mate with, and/or form an electronic connection with conductive pads 1106 (of FIG. 11). The electronic connections enable electronic communication between portable storage device 1100 and PCB 1198. PCB 1198 may communicate electronic signals between other physically connected devices such as, for example, a power supply 1180 in the form of a battery or another external device in electronic communication with data port 1192.

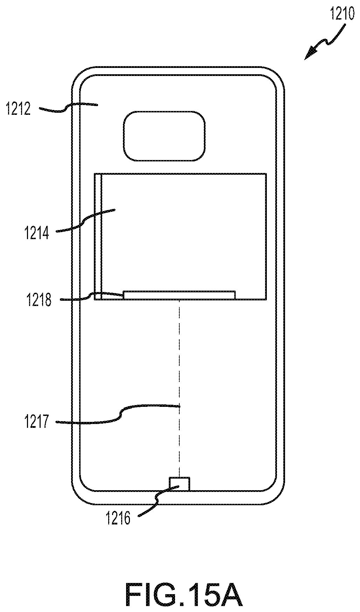

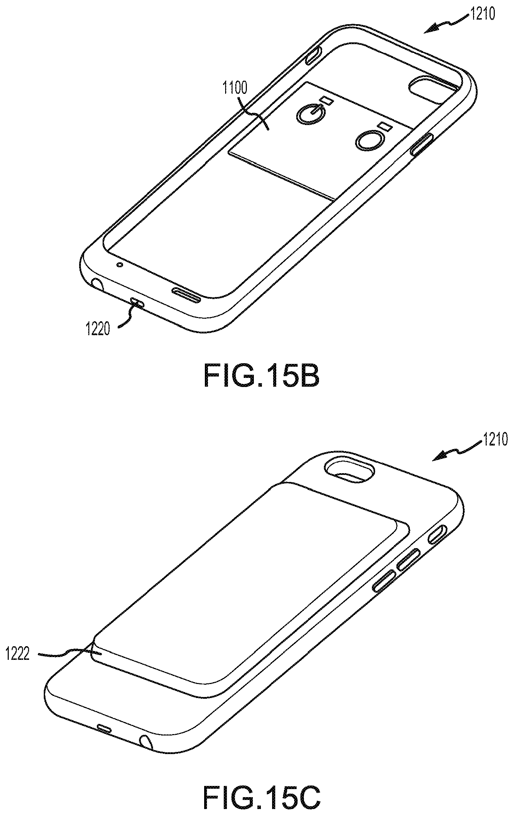

Referring now to FIGs 15A-15C, a case 1212 for a mobile computing device is shown as a portable storage assembly 1210, in accordance with various embodiments. Case 1212 may fit on a portable computing device such as, for example, a tablet, smartphone, smart watch, laptop, or other suitable computing device. Case 1212 may have an interior contour matching that of a computing device to retain the computing device. Case 1212 may define cavity 1214 with a shape suitable to receive and retain with portable storage device 1100. In that regard, portable storage device 1100 may be removably coupled to case 1212, and cavity 1214 may have a geometry mirroring 5 sides of the portable storage device with an opening shaped like a surface of the portable storage device. The cavity may thus be defined by five orthogonal surfaces. The portable storage device may lie with a surface flush with the interior of case 1212.

In various embodiments, case 1212 may include interface 1218 suitable for communication with data port 1108 or conductive pads 1106 (of FIGs. 11A-11E). Interface 1218 may by electronically coupled to a data plug 1216 by an electrical conduit 1217 such as a wire. Data plug 1216 may interface with a corresponding data port on a computing device retained within case 1212. Data plug 1216 may thus plug into the bottom port on a smartphone to electrically couple case 1212 to the smartphone, for example. Case 1212 may further include a protrusion 1222 configured to house the PCBs and power supplies described herein as well as the cavity 1214.

In various embodiments, case 1212 may enable physical electronic communication between portable storage device 1100, a power supply (e.g., power supply 1180), a PCB (e.g., PCB 1198), or other electronic devices retained within case 1212. Case 1212 may further enable electronic communication of power and/or data to and/or from the mobile device retained within case 1212. Portable storage device 1100 may also be in wireless communication with the mobile device retained within case 1212 as described herein.

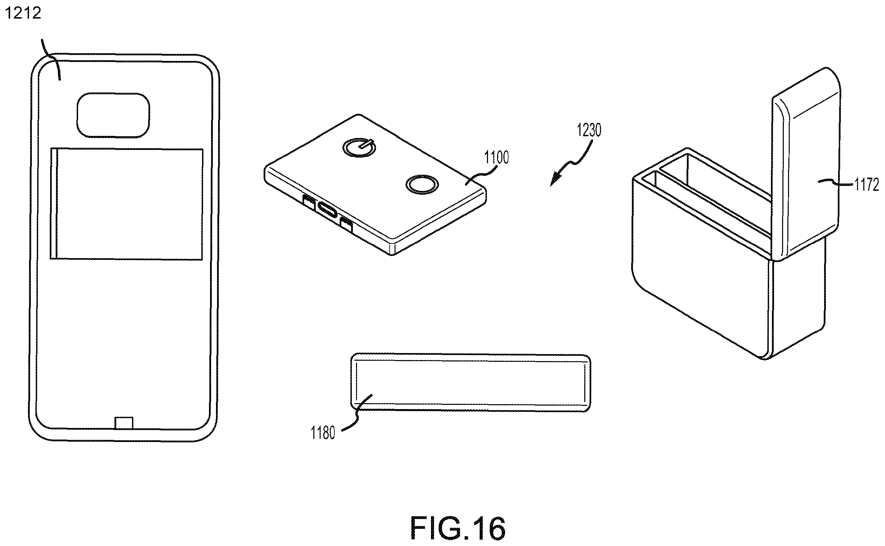

Referring briefly to FIG. 16, a modular portable storage system 1230 is shown, in accordance with various embodiments. Modular portable storage system 1230 may include case 1212, portable storage device 1100, battery 1180, and/or external housing 1172. The various components described herein may be removable and interchangeably coupled to one another electronically and mechanically. In that regard, portable storage device 1100 may be utilized in various configurations to augment functionality of computing devices in communication with portable storage device 1100.

In various embodiments, the methods described herein are implemented using the various particular machines described herein. The methods described herein may be implemented using the below particular machines, and those hereinafter developed, in any suitable combination, as would be appreciated immediately by one skilled in the art. Further, as is unambiguous from this disclosure, the methods described herein may result in various transformations of certain articles.

For the sake of brevity, conventional data networking, application development and other functional aspects of the systems (and components of the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in a practical system.

The various system components discussed herein may include one or more of the following: a host server or other computing systems including a processor for processing digital data; a memory coupled to the processor for storing digital data; an input digitizer coupled to the processor for inputting digital data; an application program stored in the memory and accessible by the processor for directing processing of digital data by the processor; a display device coupled to the processor and memory for displaying information derived from digital data processed by the processor; and a plurality of databases. Various databases used herein may include: client data; merchant data; financial institution data; and/or like data useful in the operation of the system. As those skilled in the art will appreciate, user computers may include an operating system (e.g., Windows NT, Windows 95/98/2000, Windows XP, Windows Vista, Windows 7, OS2, UNIX, Linux, Solaris, MacOS, etc.) as well as various conventional support software and drivers typically associated with computers.

A network may include any cloud, cloud computing system or electronic communications system or method which incorporates hardware and/or software components. Communication among the parties may be accomplished through any suitable communication channels, such as, for example, a telephone network, an extranet, an intranet, Internet, point of interaction device (point of sale device, personal digital assistant), smart device (e.g., iPhone^{®}, Palm Pilot^{®}, Blackberry^{®}, cellular phone, kiosk, etc.), online communications, satellite communications, off-line communications, wireless communications, transponder communications, local area network (LAN), wide area network (WAN), virtual private network (VPN), networked or linked devices, keyboard, mouse and/or any suitable communication or data input modality. Moreover, although the system is frequently described herein as being implemented with TCP/IP communications protocols, the system may also be implemented using IPX, Appletalk, IP-6, NetBIOS, OSI, any tunneling protocol (e.g. IPsec, SSH), or any number of existing or future protocols. If the network is in the nature of a public network, such as the Internet, it may be advantageous to presume the network to be insecure and open to eavesdroppers. Specific information related to the protocols, standards, and application software utilized in connection with the Internet is generally known to those skilled in the art and, as such, need not be detailed herein. See, for example, DILIP NAIK, INTERNET STANDARDS AND PROTOCOLS (1998); JAVA 2 COMPLETE, various authors, (Sybex 1999); DEBORAH RAY AND ERIC RAY, MASTERING HTML 4.0 (1997); and LOSHIN, TCP/IP CLEARLY EXPLAINED (1997) and DAVID GOURLEY AND BRIAN TOTTY, HTTP, THE DEFINITIVE GUIDE (2002), the contents of which are hereby incorporated by reference.

The various system components may be independently, separately or collectively suitably coupled to the network via data links which includes, for example, a connection to an Internet Service Provider (ISP) over the local loop as is typically used in connection with standard modem communication, cable modem, dish networks, ISDN, Digital Subscriber Line (DSL), or various wireless communication methods, see, e.g., GILBERT HELD, UNDERSTANDING DATA COMMUNICATIONS (1996), which is hereby incorporated by reference. It is noted that the network may be implemented as other types of networks, such as an interactive television (ITV) network. Moreover, the system contemplates the use, sale or distribution of any goods, services or information over any network having similar functionality described herein.

Any communication, transmission and/or channel discussed herein may include any system or method for delivering content (e.g. data, information, metadata, etc.), and/or the content itself. The content may be presented in any form or medium, and in various embodiments, the content may be delivered electronically and/or capable of being presented electronically. For example, a channel may comprise a website, a uniform resource locator ("URL"), a document (e.g., a Microsoft Word document, a Microsoft Excel document, an Adobe .pdf document, etc.), an "ebook," an "emagazine," an application or microapplication (as described below), an SMS or other type of text message, an email, Facebook, twitter, MMS and/or other type of communication technology. In various embodiments, a channel may be hosted or provided by a data partner. In various embodiments, the distribution channel may comprise at least one of a merchant website, a social media website, affiliate or partner websites, an external vendor, a mobile device communication, social media network and/or location based service. Distribution channels may include at least one of a merchant website, a social media site, affiliate or partner websites, an external vendor, and a mobile device communication. Examples of social media sites include Facebook^{®}, foursquare^{®}, Twitter^{®}, MySpace^{®}, LinkedIn^{®}, and the like. Moreover, examples of mobile device communications include texting, email, and mobile applications for smartphones.

The present system or any part(s) or function(s) thereof may be implemented using hardware, software or a combination thereof and may be implemented in one or more computer systems or other processing systems. However, the manipulations performed by embodiments were often referred to in terms, such as matching or selecting, which are commonly associated with mental operations performed by a human operator. No such capability of a human operator is necessary, or desirable in most cases, in any of the operations described herein. Rather, the operations may be machine operations. Useful machines for performing the various embodiments include general purpose digital computers or similar devices.

In fact, in various embodiments, the embodiments are directed toward one or more computer systems capable of carrying out the functionality described herein. The computer system includes one or more processors. The processor is connected to a communication infrastructure (e.g., a communications bus, cross over bar, or network). Various software embodiments are described in terms of this exemplary computer system. After reading this description, it will become apparent to a person skilled in the relevant art(s) how to implement various embodiments using other computer systems and/or architectures. Computer system can include a display interface that forwards graphics, text, and other data from the communication infrastructure (or from a frame buffer not shown) for display on a display unit.

Computer system also includes a main memory, such as for example random access memory (RAM), and may also include a secondary memory. The secondary memory may include, for example, a hard disk drive and/or a removable storage drive, representing a floppy disk drive, a magnetic tape drive, an optical disk drive, etc. The removable storage drive reads from and/or writes to a removable storage unit in a well-known manner. Removable storage unit represents a floppy disk, magnetic tape, optical disk, etc. which is read by and written to by a removable storage unit. As will be appreciated, the removable storage unit includes a computer usable storage medium having stored therein computer software and/or data.

In various embodiments, secondary memory may include other similar devices for allowing computer programs or other instructions to be loaded into computer system. Such devices may include, for example, a removable storage unit and an interface. Examples of such may include a program cartridge and cartridge interface (such as that found in video game devices), a removable memory chip (such as an erasable programmable read-only memory (EPROM), or programmable read-only memory (PROM)) and associated socket, and other removable storage units and interfaces, which allow software and data to be transferred from the removable storage unit to computer system.

Computer system may also include a communications interface. Communications interface allows software and data to be transferred between computer system and external devices. Examples of communications interface may include a modem, a network interface (such as an Ethernet card), a communications port, a Personal Computer Memory Card International Association (PCMCIA) slot and card, etc. Software and data transferred via communications interface are in the form of signals which may be electronic, electromagnetic, optical or other signals capable of being received by communications interface. These signals are provided to communications interface via a communications path (e.g., channel). This channel carries signals and may be implemented using wire, cable, fiber optics, a telephone line, a cellular link, a radio frequency (RF) link, wireless, and other communications channels.

The terms "computer program medium" and "computer usable medium" are used to generally refer to media such as a removable storage drive and a hard disk installed in a hard disk drive. These computer program products provide software to computer system.

Computer programs (also referred to as computer control logic) are stored in main memory and/or secondary memory. Computer programs may also be received via a communications interface. Such computer programs, when executed, enable the computer system to perform the features as discussed herein. In particular, the computer programs, when executed, enable the processor to perform the features of various embodiments. Accordingly, such computer programs represent controllers of the computer system.

In various embodiments, software may be stored in a computer program product and loaded into computer system using removable storage drive, hard disk drive or communications interface. The control logic (software), when executed by the processor, causes the processor to perform the functions of various embodiments as described herein. In various embodiments, hardware components such as application specific integrated circuits (ASICs) are present. Implementation of the hardware state machine so as to perform the functions described herein will be apparent to persons skilled in the relevant art(s).

In various embodiments, the server may include application servers (e.g. WEB SPHERE, WEB LOGIC, JBOSS). In various embodiments, the server may include web servers (e.g. APACHE, IIS, GWS, SUN JAVA SYSTEM WEB SERVER).

As those skilled in the art will appreciate, a device may include but is not limited to an operating system (e.g., Windows NT, 95/98/2000/CE/Mobile, OS2, UNIX, Linux, Solaris, MacOS, PalmOS, etc.) as well as various conventional support software and drivers typically associated with computers. A device may include but is not limited to any suitable personal computer, network computer, workstation, personal digital assistant, cellular phone, smart phone, minicomputer, mainframe or the like. A device can be in a home or business environment with access to a network. In various embodiments, access is through a network or the Internet through a commercially available web-browser software package. A device may implement security protocols such as Secure Sockets Layer (SSL) and Transport Layer Security (TLS). A device may implement several application layer protocols including http, https, ftp, and sftp.

In various embodiments, components, modules, and/or engines of system 100 may be implemented as micro-applications or micro-apps. Micro-apps are typically deployed in the context of a mobile operating system, including for example, a Palm mobile operating system, a Windows mobile operating system, an Android Operating System, Apple iOS, a Blackberry operating system and the like. The micro-app may be configured to leverage the resources of the larger operating system and associated hardware via a set of predetermined rules which govern the operations of various operating systems and hardware resources. For example, where a micro-app desires to communicate with a device or network other than the mobile device or mobile operating system, the micro-app may leverage the communication protocol of the operating system and associated device hardware under the predetermined rules of the mobile operating system. Moreover, where the micro-app desires an input from a user, the micro-app may be configured to request a response from the operating system which monitors various hardware components and then communicates a detected input from the hardware to the micro-app.

"Cloud" or "Cloud computing" includes a model for enabling convenient, on-demand network access to a shared pool of configurable computing resources (e.g., networks, servers, storage, applications, and services) that can be rapidly provisioned and released with minimal management effort or service provider interaction. Cloud computing may include locationindependent computing, whereby shared servers provide resources, software, and data to computers and other devices on demand. For more information regarding cloud computing, see the NIST's (National Institute of Standards and Technology) definition of cloud computing at http://csrc.nist.gov/groups/SNS/cloud-computing/cloud-def-v15.doc (last visited February 4, 2011), which is hereby incorporated by reference in its entirety.

As used herein, "transmit" may include sending electronic data from one system component to another. Additionally, as used herein, "data" may include encompassing information such as commands, queries, files, data for storage, and the like in digital or any other form.

The system contemplates uses in association with web services, utility computing, pervasive and individualized computing, security and identity solutions, autonomic computing, cloud computing, commodity computing, mobility and wireless solutions, open source, biometrics, grid computing and/or mesh computing.

Any databases discussed herein may include relational, hierarchical, graphical, or object-oriented structure and/or any other database configurations. Common database products that may be used to implement the databases include DB2 by IBM (Armonk, NY), various database products available from Oracle Corporation (Redwood Shores, CA), Microsoft Access or Microsoft SQL Server by Microsoft Corporation (Redmond, Washington), MySQL by MySQL AB (Uppsala, Sweden), or any other suitable database product. Moreover, the databases may be organized in any suitable manner, for example, as data tables or lookup tables. Each record may be a single file, a series of files, a linked series of data fields or any other data structure. Association of certain data may be accomplished through any desired data association technique such as those known or practiced in the art. For example, the association may be accomplished either manually or automatically. Automatic association techniques may include, for example, a database search, a database merge, GREP, AGREP, SQL, using a key field in the tables to speed searches, sequential searches through all the tables and files, sorting records in the file according to a known order to simplify lookup, and/or the like. The association step may be accomplished by a database merge function, for example, using a "key field" in pre-selected databases or data sectors. Various database tuning steps are contemplated to optimize database performance. For example, frequently used files such as indexes may be placed on separate file systems to reduce In/Out ("I/O") bottlenecks.

One skilled in the art will also appreciate that, for security reasons, any databases, systems, devices, servers or other components of the system may consist of any combination thereof at a single location or at multiple locations, wherein each database or system includes any of various suitable security features, such as firewalls, access codes, encryption, decryption, compression, decompression, and/or the like.

Encryption may be performed by way of any of the techniques now available in the art or which may become available-e.g., Twofish, RSA, El Gamal, Schorr signature, DSA, PGP, PKI, GPG (GnuPG), and symmetric and asymmetric cryptosystems.

The computing unit of the device may be further equipped with an Internet browser connected to the Internet or an intranet using standard dial-up, cable, DSL or any other Internet protocol known in the art. Transactions originating at a device may pass through a firewall in order to prevent unauthorized access from users of other networks. Further, additional firewalls may be deployed between the varying components of the system to further enhance security.

The computers discussed herein may provide a suitable website or other Internet-based graphical user interface which is accessible by users. In various embodiments, the Microsoft Internet Information Server (IIS), Microsoft Transaction Server (MTS), and Microsoft SQL Server, are used in conjunction with the Microsoft operating system, Microsoft NT web server software, a Microsoft SQL Server database system, and a Microsoft Commerce Server. Additionally, components such as Access or Microsoft SQL Server, Oracle, Sybase, Informix MySQL, Interbase, etc., may be used to provide an Active Data Object (ADO) compliant database management system. In various embodiments, the Apache web server is used in conjunction with a Linux operating system, a MySQL database, and the Perl, PHP, and/or Python programming languages.

Any of the communications, inputs, storage, databases or displays discussed herein may be facilitated through a website having web pages. The term "web page" as it is used herein is not meant to limit the type of documents and applications that might be used to interact with the user. For example, a typical website might include, in addition to standard HTML documents, various forms, Java applets, JavaScript, active server pages (ASP), common gateway interface scripts (CGI), extensible markup language (XML), dynamic HTML, cascading style sheets (CSS), AJAX (Asynchronous Javascript And XML), helper applications, plug-ins, and the like. A server may include a web service that receives a request from a web server, the request including a URL (http://yahoo.com/stockquotes/ge) and an IP address (123.56.789.234). The web server retrieves the appropriate web pages and sends the data or applications for the web pages to the IP address. Web services are applications that are capable of interacting with other applications over a communications means, such as the internet. Web services are typically based on standards or protocols such as XML, SOAP, AJAX, WSDL and UDDI. Web services methods are well known in the art, and are covered in many standard texts. See, e.g., ALEX NGHIEM, IT WEB SERVICES: A ROADMAP FOR THE ENTERPRISE (2003), hereby incorporated by reference.

Middleware may include any hardware and/or software suitably configured to facilitate communications and/or process transactions between disparate computing systems. Middleware components are commercially available and known in the art. Middleware may be implemented through commercially available hardware and/or software, through custom hardware and/or software components, or through a combination thereof. Middleware may reside in a variety of configurations and may exist as a standalone system or may be a software component residing on the Internet server. Middleware may be configured to process transactions between the various components of an application server and any number of internal or external systems for any of the purposes disclosed herein. WebSphere MQTM (formerly MQSeries) by IBM, Inc. (Armonk, NY) is an example of a commercially available middleware product. An Enterprise Service Bus ("ESB") application is another example of middleware.

Practitioners will also appreciate that there are a number of methods for displaying data within a browser-based document. Data may be represented as standard text or within a fixed list, scrollable list, drop-down list, editable text field, fixed text field, pop-up window, and the like. Likewise, there are a number of methods available for modifying data in a web page such as, for example, free text entry using a keyboard, selection of menu items, check boxes, option boxes, and the like.

The system and method may be described herein in terms of functional block components, screen shots, optional selections and various processing steps. It should be appreciated that such functional blocks may be realized by any number of hardware and/or software components configured to perform the specified functions. For example, the system may employ various integrated circuit components, e.g., memory elements, processing elements, logic elements, look-up tables, and the like, which may carry out a variety of functions under the control of one or more microprocessors or other control devices. Similarly, the software elements of the system may be implemented with any programming or scripting language such as C, C++, C#, Java, JavaScript, VBScript, Macromedia Cold Fusion, COBOL, Microsoft Active Server Pages, assembly, PERL, PHP, awk, Python, Visual Basic, SQL Stored Procedures, PL/SQL, any UNIX shell script, and extensible markup language (XML) with the various algorithms being implemented with any combination of data structures, objects, processes, routines or other programming elements. Further, it should be noted that the system may employ any number of conventional techniques for data transmission, signaling, data processing, network control, and the like. Still further, the system could be used to detect or prevent security issues with a client-side scripting language, such as JavaScript, VBScript or the like. For a basic introduction of cryptography and network security, see any of the following references: (1) "Applied Cryptography: Protocols, Algorithms, And Source Code In C," by Bruce Schneier, published by John Wiley & Sons (second edition, 1995); (2) "Java Cryptography" by Jonathan Knudson, published by O'Reilly & Associates (1998); (3) "Cryptography & Network Security: Principles & Practice" by William Stallings, published by Prentice Hall; all of which are hereby incorporated by reference.

As will be appreciated by one of ordinary skill in the art, the system may be embodied as a customization of an existing system, an add-on product, a processing apparatus executing upgraded software, a stand alone system, a distributed system, a method, a data processing system, a device for data processing, and/or a computer program product. Accordingly, any portion of the system or a module may take the form of a processing apparatus executing code, an internet based embodiment, an entirely hardware embodiment, or an embodiment combining aspects of the internet, software and hardware. Furthermore, the system may take the form of a computer program product on a computer-readable storage medium having computer-readable program code means embodied in the storage medium. Any suitable computer-readable storage medium may be utilized, including hard disks, CD-ROM, optical storage devices, magnetic storage devices, and/or the like.

The system and method is described herein with reference to screen shots, block diagrams and flowchart illustrations of methods, apparatus (e.g., systems), and computer program products according to various embodiments. It will be understood that each functional block of the block diagrams and the flowchart illustrations, and combinations of functional blocks in the block diagrams and flowchart illustrations, respectively, can be implemented by computer program instructions.

These computer program instructions may be loaded onto a general purpose computer, special purpose computer, or other programmable data processing apparatus to produce a machine, such that the instructions that execute on the computer or other programmable data processing apparatus create means for implementing the functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions specified in the flowchart block or blocks.

Accordingly, functional blocks of the block diagrams and flowchart illustrations support combinations of means for performing the specified functions, combinations of steps for performing the specified functions, and program instruction means for performing the specified functions. It will also be understood that each functional block of the block diagrams and flowchart illustrations, and combinations of functional blocks in the block diagrams and flowchart illustrations, can be implemented by either special purpose hardware-based computer systems which perform the specified functions or steps, or suitable combinations of special purpose hardware and computer instructions. Further, illustrations of the process flows and the descriptions thereof may make reference to user windows, webpages, websites, web forms, prompts, etc. Practitioners will appreciate that the illustrated steps described herein may comprise in any number of configurations including the use of windows, webpages, web forms, popup windows, prompts and the like. It should be further appreciated that the multiple steps as illustrated and described may be combined into single webpages and/or windows but have been expanded for the sake of simplicity. In other cases, steps illustrated and described as single process steps may be separated into multiple webpages and/or windows but have been combined for simplicity.

The term "non-transitory" is to be understood to remove only propagating transitory signals per se from the claim scope and does not relinquish rights to all standard computer-readable media that are not only propagating transitory signals per se.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the disclosure. Reference to an element in the singular is not intended to mean "one and only one" unless explicitly so stated, but rather "one or more." Moreover, where a phrase similar to 'at least one of A, B, and C' or 'at least one of A, B, or C' is used in the claims or specification, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Although the disclosure includes a method, it is contemplated that it may be embodied as computer program instructions on a tangible computer-readable carrier, such as a magnetic or optical memory or a magnetic or optical disk. All structural, chemical, and functional equivalents to the elements of the above-described exemplary embodiments that are known to those of ordinary skill in the art are expressly incorporated herein by reference and are intended to be encompassed by the present claims. Moreover, it is not necessary for a device or method to address each and every problem sought to be solved by the present disclosure, for it to be encompassed by the present claims. Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A modular portable storage system (1230), comprising:
a portable storage device (1100) comprising a housing (1102) having a cuboid geometry, the housing (1102) retaining a processor (830), a storage module (810) in electronic communication with the processor (830), and a wireless communication module (820);
a circuit board (1198) in electronic communication with the portable storage device (1100), wherein the portable storage device (1100) is removably coupled to the circuit board (1198);
a power supply (1180) in electronic communication with the circuit board (1198), wherein the power supply (1180) is removably coupled to the circuit board (1198); and
an external housing (1172) with the portable storage device (1100) and the power supply (1180) removably retained within the external housing (1172), wherein the circuit board (1198) is mechanically coupled to the external housing (1172).

2. The modular portable storage system of claim 1, wherein the portable storage device (1100) further comprises a data port (1108) exposed from a first surface (1105) of the portable storage device (1100).

3. The modular portable storage system of claim 2, wherein the portable storage device (1100) further comprises conductive pads (1106) exposed from the first surface (1105) of the portable storage device (1100).

4. The modular portable storage system of claim 3, further comprising a case (1212) for a mobile device defining a cavity (1214) configured to retain the portable storage device (1100), wherein the data port (1108) is disposed between at least two of the conductive pads (1106).

5. The modular portable storage system of claim 4, wherein the case (1212) further comprises an interface (1218) disposed in the cavity (1214) and configured for electronic coupling to at least one of the conductive pads (1106) or the data port (1108), a data plug (1216) in electronic communication with the interface (1218) and configured to engage a plug on the mobile device, and a protrusion (1222) configured to house the cavity, wherein the protrusion is configured to house the power supply (1180).

## Patentansprüche

1. Modulares tragbares Speichersystem (1230), Folgendes umfassend:
ein tragbares Speichergerät (1100), das ein Gehäuse (1102) mit einer quaderförmigen Geometrie umfasst, wobei das Gehäuse (1102) einen Prozessor (830), ein Speichermodul (810), das in elektronischer Kommunikation mit dem Prozessor (830) steht, und ein drahtloses Kommunikationsmodul (820) aufnimmt;
eine Leiterplatte (1198), die in elektronischer Kommunikation mit dem tragbaren Speichergerät (1100) steht, wobei das tragbare Speichergerät (1100) abnehmbar mit der Leiterplatte (1198) gekoppelt ist;
ein Netzteil (1180), das in elektronischer Kommunikation mit der Leiterplatte (1198) steht, wobei das Netzteil (1180) abnehmbar mit der Leiterplatte (1198) gekoppelt ist; und
ein externes Gehäuse (1172), wobei das tragbare Speichergerät (1100) und das Netzteil (1180) abnehmbar innerhalb des externen Gehäuses (1172) aufgenommen sind, wobei die Leiterplatte (1198) mechanisch mit dem externen Gehäuse (1172) gekoppelt ist.

2. Modulares tragbares Speichersystem nach Anspruch 1, wobei das tragbare Speichergerät (1100) ferner einen Datenanschluss (1108) umfasst, der von einer ersten Oberfläche (1105) des tragbaren Speichergeräts (1100) aus freiliegt.

3. Modulares tragbares Speichersystem nach Anspruch 2, wobei das tragbare Speichergerät (1100) ferner leitfähige Pads (1106) umfasst, die von der ersten Oberfläche (1105) des tragbaren Speichergeräts (1100) aus freiliegen.

4. Modulares tragbares Speichersystem nach Anspruch 3, das ferner eine Umhüllung (1212) für ein Mobilgerät umfasst, die einen Hohlraum (1214) definiert, der dafür konfiguriert ist, das tragbare Speichergerät (1100) aufzunehmen, wobei der Datenanschluss (1108) zwischen mindestens zwei der leitfähigen Pads (1106) angeordnet ist.

5. Modulares tragbares Speichersystem nach Anspruch 4, wobei die Umhüllung (1212) ferner eine Schnittstelle (1218), die in dem Hohlraum (1214) angeordnet und für eine elektronische Kopplung mit mindestens einem der leitfähigen Pads (1106) oder dem Datenanschluss (1108) konfiguriert ist, einen Datenstecker (1216), der in elektronischer Kommunikation mit der Schnittstelle (1218) steht und dafür konfiguriert ist, in einen Stecker an dem Mobilgerät einzugreifen, und einen Vorsprung (1222), der dafür konfiguriert ist, den Hohlraum zu beherbergen, umfasst, wobei der Vorsprung dafür konfiguriert ist, das Netzteil (1180) zu beherbergen.

## Revendications

1. Système de stockage portable modulaire (1230), comprenant :
un dispositif de stockage portable (1100) comprenant un boîtier (1102) à géométrie de pavé droit, le boîtier (1102) retenant un processeur (830), un module de stockage (810) en communication électronique avec le processeur (830), et un module de communication sans fil (820) ;
une carte de circuit imprimé (1198) en communication électronique avec le dispositif de stockage portable (1100), dans lequel le dispositif de stockage portable (1100) est couplé de manière amovible à la carte de circuit imprimé (1198) ;
un bloc d'alimentation (1180) en communication électronique avec la carte de circuit imprimé (1198), le bloc d'alimentation (1180) étant couplé de manière amovible à la carte de circuit imprimé (1198) ; et
un boîtier externe (1172), le dispositif de stockage portable (1100) et le bloc d'alimentation (1180) étant retenus de manière amovible dans le boîtier externe (1172), dans lequel la carte de circuit imprimé (1198) est couplée mécaniquement au boîtier externe (1172).

2. Système de stockage portable modulaire selon la revendication 1, dans lequel le dispositif de stockage portable (1100) comprend en outre un port de données (1108) exposé à partir d'une première surface (1105) du dispositif de stockage portable (1100).

3. Système de stockage portable modulaire selon la revendication 2, dans lequel le dispositif de stockage portable (1100) comprend en outre des plots conducteurs (1106) exposés à partir de la première surface (1105) du dispositif de stockage portable (1100).

4. Système de stockage portable modulaire selon la revendication 3, comprenant en outre un étui (1212) pour un dispositif mobile, définissant une cavité (1214) configurée pour retenir le dispositif de stockage portable (1100), dans lequel le port de données (1108) est disposé entre au moins deux des plots conducteurs (1106).

5. Système de stockage portable modulaire selon la revendication 4, dans lequel l'étui (1212) comprend en outre une interface (1218) disposée dans la cavité (1214) et configurée pour un couplage électronique avec au moins l'un des plots conducteurs (1106) ou le port de données (1108), une fiche de données (1216) en communication électronique avec l'interface (1218) et configurée pour entrer en prise avec une fiche sur le dispositif mobile, et une protubérance (1222) configurée pour abriter la cavité, la protubérance étant configurée pour abriter le bloc d'alimentation (1180).
